# EUROPÄISCHE PATENTANMELDUNG

(11) **EP 1 843 176 A1**
(43) Veröffentlichungstag der Anmeldung: **10.10.2007**
(21) Anmeldenummer: 07004311.2
(22) Anmeldetag: 02.03.2007
(51) Int. Cl.: G01V 8/20, G08B 13/183

(54) **Verfahren zur Überwachung von Öffnungen an der Außenhaut von Luftfahrzeugen gegen unbefugtes Eindringen von Personen oder Sachen**

(30) Priorität: 07.04.2006 DE 102006016422
(71) Anmelder: EADS Deutschland GmbH, 85521 Ottobrunn (DE)
(72) Erfinder: Scherbarth, Stefan, Dr., 88677 Markdorf (DE)
(74) Vertreter: Meel, Thomas

(57) **Zusammenfassung**

Die Erfindung betrifft ein Verfahren zur Überwachung von Öffnungen an der Außenhaut von Luftfahrzeugen gegen unbefugtes Eindringen von Personen oder Sachen, bei dem
- eine oder mehrere Lichtschrankenanordnungen an oder in der Öffnung angeordnet werden, wobei eine einzelne Lichtschrankenanordnung eine Mehrzahl von Lichtquellen (LED) sowie mindestens eine Kamera (K) zum Empfang des von den Lichtquellen (LED) ausgesandten Lichts umfasst, und wobei
- mit einem Prozessor der zeitliche Verlauf der von der Kamera (K) von jeder einzelnen Lichtquelle (LED) empfangenen Lichtleistung ausgewertet wird und bei Unterbrechung mindestens einer Lichtschrankenanordnung ein Alarm gemeldet wird.
- die Abstrahlung der Lichtquellen (LED) und der Empfang der Kamera (K) spektral und/oder zeitlich miteinander korreliert sind, um sicherzustellen, dass die Kamera nicht durch Umgebungslicht beeinflusst wird.

## Beschreibung

Die Erfindung betrifft eine Vorrichtung zur Überwachung von Öffnungen an der Außenhaut von Luftfahrzeugen gegen unbefugtes Eindringen von Personen oder Sachen.

Der Fahrwerkschacht von Großflugzeugen wird immer wieder als Zuflucht für blinde Passagiere genutzt. Eine solche Aktion stellt nicht nur eine akute Lebensgefahr für die Person selbst dar, sondern berührt darüber hinaus die Sicherheit von Passagieren und Besatzung. Der Fahrwerkschacht könnte auch als Angriffspunkt für eine terroristische Bedrohung genutzt werden, um dort Sprengstoff zu deponieren.

Der Erfindung liegt deshalb die Aufgabe zugrunde, ein Verfahren zu schaffen, mit dem das unerlaubte Eindringen von Personen und Sachen in den Fahrwerkschacht oder in sonstige Öffnungen an der Außenhaut von Flugzeugen zuverlässig erkannt werden kann, wobei die Falschalarmrate sehr gering sein soll.

Diese Aufgabe wird mit dem Verfahren nach Anspruch 1 gelöst. Vorteilhafte Ausführungen der Erfindung sind Gegenstand weiterer Ansprüche.

Gemäß der Erfindung werden eine oder mehrere Lichtschrankenanordnungen an oder in der zu überwachenden Öffnung angeordnet. Eine einzelne Lichtschrankenanordnung umfasst dabei eine Mehrzahl von Lichtquellen sowie mindestens eine Kamera zum Empfang des von den Lichtquellen ausgesandten Lichts. Mit einem Prozessor wird der zeitliche Verlauf der von der Kamera von jeder einzelnen Lichtquelle empfangenen Lichtleistung ausgewertet. Es wird ermittelt, ob ein oder mehrere Strahlen einer Lichtschrankenanordnung unterbrochen ist (mit Strahl ist hier vereinfachend das von eine Lichtquelle in Richtung auf die Kamera ausgesandte Licht gemeint), d.h. ob die von einer Lichtquelle empfangene Lichtleistung unter einem bestimmten Schwellwert liegt.

Um auszuschließen, dass eine Kamera durch Umgebungslicht beeinflusst wird, wird die Abstrahlung der Lichtquellen und der Empfang der Kamera spektral und/oder zeitlich miteinander korreliert. Bei der spektrale Korrelation erfolgt eine spektrale Filterung des Lichts, so dass Abstrahlung und Auswertung nur in einem vorgegebenen Längenwellenbereich erfolgt. Bei der zeitlichen Korrelation erfolgt die Abstrahlung der Lichtquellen pulsartig, wobei die Kamera nur in einem korrespondierenden pulsartigen Zeitbereich geöffnet wird.

Wenn an einer Öffnung mehrere Lichtschrankenanordnungen (z.B. zwei oder drei Lichtschrankenanordnungen) zur Überwachung eingesetzt werden, so können diese vorteilhaft gekreuzt auch zueinander angeordnet werden.

In einer weiteren Ausführung kann eine Kamera mittig und versenkt in der zu überwachenden Öffnung, z.B. im Fahrwerkschacht, angeordnet werden, während die Lichtquellen entlang des Randes der Öffnung angeordnet sind, so dass die Strahlen der Lichtquellen pyramidenförmig in Richtung auf die zentrale Kamera verlaufen.

Als Puls- und Auswertefrequenz wird vorteilhaft eine Frequenz von 50 bzw. 60 Hz (Halbbild-Frequenz) gewählt.

In einer weiteren Ausführung führt die Kamera zur Anpassung an die Helligkeit der Lichtquellen automatisch eine Regelung der Lichtverstärkung durch. Dies ist insbesondere deshalb von Bedeutung, weil die an der Kamera empfangene Lichtleistung von den Umgebungsbedingungen (z.B. Nebel) sowie Verschmutzungen an Lichtquelle und Kameraobjektiv beeinflusst sein kann.

Bei der Prüfung, ob ein Alarm vorliegt, kann die Anzahl der unterbrochenen Strahlen (innerhalb einer Lichtschrankenanordnung oder summiert über alle Lichtschrankenanordnungen) in Betracht gezogen werden.

Auch die Korrelation der unterbrochenen Strahlen unterschiedlicher Lichtschrankenanordnungen kann verwendet werden. Ist z.B. ein Strahl innerhalb einer ersten fächerförmigen Lichtschrankenanordnung unterbrochen, jedoch kein Strahl innerhalb einer zweiten fächerförmigen Lichtschrankenanordnung, die gekreuzt zur ersten Lichtschrankenanordnung angeordnet ist, so kann davon ausgegangen werden, dass kein Alarm vorliegt. Es muss sich dann nämlich um ein sehr kleines Objekt (z.B. Fliege, Vogel) handeln. Um die Falschalarmrate zu vermindern, kann deshalb vorgesehen werden, dass ein Alarm nur ausgelöst wird, falls mehrere Lichtschrankenanordnungen gleichzeitig auslösen.

In einer besonders vorteilhaften Ausführung des erfindungsgemäßen Verfahrens wird die konkrete Auslösebedingung für einen Alarm nicht fest vorgegeben, sondern adaptiv unter Berücksichtigung konkreter Zustandsinformationen eingestellt. Dadurch kann die Falschalarmrate wesentliche reduziert werden. Solche Zustandsbedingungen können insbesondere sein:
- Eigenschaften des Signalverlaufs der von der Kamera empfangenen Lichtleistung, wie Fluktuationen (Signalrauschen bei Nebel oder Schneefall) oder absolute Stärke des Signals (geringe Signalstärke aufgrund von Verschmutzungen der Lichtquellen oder des Kameraobjektivs).
- Umgebungsbedingungen (Wind, Temperatur)
- Bewegungszustand des Luftfahrzeugs (Geschwindigkeit über Grund).

Die benötigten Größen hinsichtlich Umgebungsbedingungen und Bewegungszustand können direkt aus dem Datenbus des Luftfahrzeugs entnommen werden.

Zum Beispiel im Fall von Nebel oder Schneefall wird das Signalrauschen stark zunehmen, so dass die Wahrscheinlichkeit für einen Fehlalarm ansteigt. Auf der Basis der vorhandenen Informationen zum Bewegungszustand des Flugzeugs, zu den herrschenden Umweltbedingungen sowie aufgrund des vorhandenen Signalrauschens wird diese Situation erkannt und es erfolgt automatisch eine Anhebung der Auslöseschwellen (Schwellwert für die empfangene Lichtleistung, Mindestzahl der unterbrochenen Strahlen, etc). Diese Anpassung kann bedeuten, dass die Überwachung auf die Detektion von größeren Objekten (Personen) reduziert wird.

Kommt es auf der Basis der Auswertung der Kamerasignale zu einer Detektion eines Alarms, so kann in einer zweiten Verarbeitungsstufe eine zusätzliche Verifikation diese Alarms durchgeführt werden. Es ergeben sich somit zwei verschiedene Alarmstufen. Zur Verifikation wird mit einer der vorhandenen Kameras ein Bild des auslösenden Objekts aufgenommen. Zur Beleuchtung können die vorhandenen Lichtquellen der Lichtschrankenanordnungen verwendet werden. Es ist jedoch auch möglich, zusätzliche Beleuchtungsmittel zu installieren.

Die Bildauswertung kann mittels Prozessor automatisch erfolgen. Alternativ oder zusätzlich ist es jedoch auch möglich, die Auswertung des von dem auslösenden Objekt aufgenommenen Bilds manuell durch einen Bediener des Luftfahrzeugs vorzunehmen.

Durch die aufgrund der Verifikation zur Verfügung stehenden Zusatzinformationen wird die Falschalarmrate weiter vermindert.

Die Erfindung wird anhand mehrerer Ausführungsbeispiels unter Bezugnahme auf Fig. näher erläutert. Es zeigen:
- Fig. 1: eine Vorrichtung zur Durchführung des erfindungsgemäßen Verfahrens mit einer Lichtschrankenanordnung,
- Fig. 2: eine Vorrichtung zur Durchführung des erfindungsgemäßen Verfahrens mit zwei gekreuzten Lichtschrankenanordnungen,
- Fig. 3: eine Vorrichtung zur Durchführung des erfindungsgemäßen Verfahrens mit einer mittig im Fahrwerksschacht angeordneter Kamera.

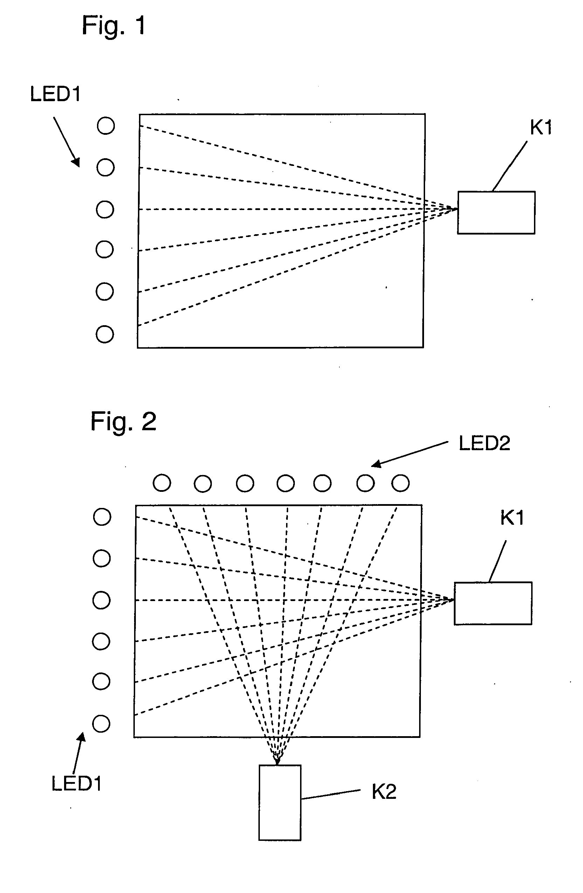

Die Fig. 1 zeigt in schematischer Ansicht den Querschnitt eines Fahrwerksschachts eines Flugzeugs, der mit einer einzelnen erfindungsgemäßen Lichtschrankenanordnung gesichert ist. Die Lichtschrankenanordnung umfasst als wesentliche Komponenten mehrere Lichtquellen LED1, welche hier als weitwinklig abstrahlende Leuchtdioden (LED) an einer Seite des Fahrwerkschachts in Linie angeordnet sind sowie eine Kamera K1 als Detektor an der gegenüberliegenden Seite des Fahrwerkschachts. Der Öffnungswinkel einer Leuchtdiode LED1 wird z.B. mit 60° gewählt. Die Kamera K1 besitzt ein Weitwinkelobjektiv, um die Strahlung sämtlicher Leuchtdioden LED1 zu empfangen. Die Strahlen der Leuchtdioden LED1 laufen fächerförmig zu der Kamera K. Anstatt einer Leuchtdiode kann z.B. auch ein Halbleiterlaser oder eine organische Leuchtdiode (OLED) eingesetzt werden.

Das Kamerabild zeigt die Leuchtdioden LED1 als einzelne Leuchtpunkte, deren Vorhandensein von einem Prozessor (z.B. in die Kamera integriert) ausgewertet wird.

Die Abstände der Leuchtdioden LED1 bzw. der Strahlen wird vorteilhaft so eng gewählt, dass das kleinste zu detektierende Objekt noch mindestens 2 bis 3 Strahlen abdeckt, um Fehlalarme möglichst auszuschließen.

Kameraobjektiv und Leuchtdioden können bei Vereisungsbedingungen geheizt werden. Bei Vereisung oder sonstigen eingeschränkten Sichtbedingungen kann auch die Helligkeit der Leuchtdioden erhöht werden.

Zur Entfernung von Schmutz kann die Kamera auch mit einem Wischer zur Reinigung des Objektivs versehen werden. Das Objektiv kann in einer weiteren Ausführung mit einer selbst reinigenden Beschichtung ausgestattet sein.

In einer weiteren Ausführung kann die Helligkeit der Leuchtdioden auch individuell eingestellt werden, um die Verschmutzung einzelnen Leuchtdioden zu kompensieren.

Das System zur Durchführung des erfindungsgemäßen Verfahrens weist eine eigene Stromversorgung auf, so dass es auch in Zeiten betrieben werden kann, in denen das Luftfahrzeug nicht in Betrieb ist. Alarme außerhalb der Betriebszeiten des Luftfahrzeugs werden zwischengespeichert.

An einer Öffnung können mehrere Lichtschrankenanordnungen gekreuzt zueinander montiert werden (z.B. zwei oder drei Lichtschranken). Eine Ausführung mit genau zwei Lichtschrankenanordnungen zeigt Fig. 2. Ausgehend von der Ausführung nach Fig. 1 ist hier eine zweite Lichtschrankenanordnungen mit zweiter Kamera K2 und zweiter Gruppe von Leuchtdioden LED2 im rechten Winkel zur ersten Lichtschrankenanordnung angeordnet. Dadurch können zusätzliche Bereiche der zu überwachenden Öffnung, die mit einer Lichtschrankenanordnung allein nicht abgedeckt werden können, erfasst werden. Darüber hinaus ergibt sich durch dieser Maßnahme eine weitere Möglichkeit zur Optimierung der Falschalarmraterate. Z.B. kann die Auslösebedingung so gewählt werden, dass die erste Alarmstufe (vor der Verifikation) erst erreicht wird, wenn mehrere Lichtschrankenanordnungen auslösen. Außerdem wird durch die Einführung weiterer Lichtschrankenanordnungen eine Redundanz erzielt, so dass auch beim Ausfall einer Lichtschrankenanordnung die erfindungsgemäße Funktionalität aufrechterhalten werden kann.

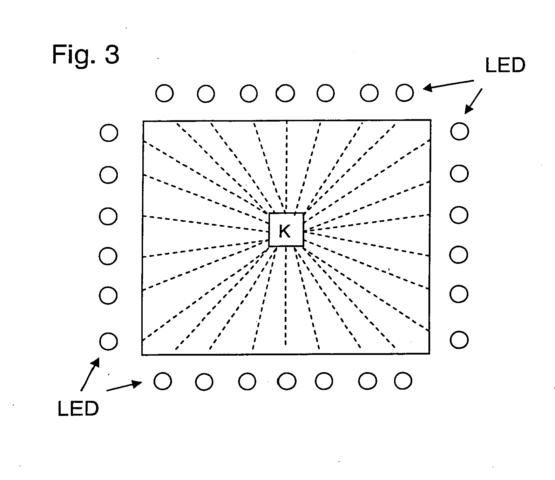

In einer weiteren Ausführung gemäß Fig. 3 kann eine Kamera K mittig und versenkt in der zu überwachenden Öffnung, z.B. im Fahrwerkschacht, angeordnet werden. Die Lichtquellen LED verlaufen rundum entlang des Rands der Öffnung, so dass die Strahlen der Lichtquellen LED pyramidenförmig in Richtung auf die zentrale Kamera verlaufen. Mit dieser Ausführung wird auch ein verbesserter Schutz der Kamera gegen Schneebedeckung erreicht.

Die vorliegende Erfindung ist insbesondere für die Überwachung von Fahrwerksschächten von Großraumflugzeugen geeignet. Sie kann aber auch für andere Öffnungen an der Außenhaut eines Flugzeugs oder anderer Luftfahrzeuge, z.B. Helikoptern, verwendet werden.

## Patentansprüche

1. Verfahren zur Überwachung von Öffnungen an der Außenhaut von Luftfahrzeugen gegen unbefugtes Eindringen von Personen oder Sachen, bei dem
- eine oder mehrere Lichtschrankenanordnungen an oder in der Öffnung angeordnet werden, wobei eine einzelne Lichtschrankenanordnung eine Mehrzahl von Lichtquellen (LED) sowie mindestens eine Kamera (K) zum Empfang des von den Lichtquellen (LED) ausgesandten Lichts umfasst, und wobei
- mit einem Prozessor der zeitliche Verlauf der von der Kamera (K) von jeder einzelnen Lichtquelle (LED) empfangenen Lichtleistung ausgewertet wird und bei Unterbrechung mindestens einer Lichtschrankenanordnung ein Alarm gemeldet wird.
- die Abstrahlung der Lichtquellen (LED) und der Empfang der Kamera (K) spektral und/oder zeitlich miteinander korreliert sind, um sicherzustellen, dass die Kamera nicht durch Umgebungslicht beeinflusst wird.

2. Verfahren nach Anspruch 1, **dadurch gekennzeichnet, dass** die Kamera (K) zur Anpassung an die Helligkeit der Lichtquellen automatisch eine Regelung der Lichtverstärkung durchführt.

3. Verfahren nach einem der vorangehenden Ansprüche, **dadurch gekennzeichnet, dass** eine oder mehrere der folgenden Kriterien für die Prüfung, ob ein Alarm vorliegt, berücksichtigt werden:
- Wert der der von der Kamera (K) von einer einzelnen Lichtquellen (LED) empfangenen Lichtleistung fällt unter eine bestimmten Schwelle,
- Zahl der Lichtquellen (LED), deren von der Kamera empfangene Lichtleistung unter einer bestimmten Schwelle fällt,
- Korrelation der Auswertedaten verschiedener Lichtschrankenanordnungen.

4. Verfahren nach einem der vorangehenden Ansprüche, **dadurch gekennzeichnet, dass** die Bedingungen für einen Alarm adaptiv unter Einbeziehung einer oder mehrerer der folgenden Größen festgelegt werden:
- Eigenschaften des Signalverlaufs der von der Kamera (K) empfangenen Lichtleistung, wie Fluktuationen oder absolute Stärke,
- Umgebungsbedingungen,
- Bewegungszustand des Luftfahrzeugs.

5. Verfahren nach einem der vorangehenden Ansprüche, **dadurch gekennzeichnet, dass** nach Detektion eines Alarms eine Verifikation dieses Alarms durchgeführt wird, indem mit der Kamera (K) ein Bild es auslösenden Objekts aufgenommen wird.

6. Verfahren nach Anspruch 5, **dadurch gekennzeichnet, dass** die Auswertung des von dem auslösenden Objekt aufgenommenen Bilds mittels Prozessor automatisch erfolgt.

7. Verfahren nach Anspruch 5 oder 6, **dadurch gekennzeichnet, dass** die Auswertung des von dem auslösenden Objekt aufgenommenen Bilds manuell durch einen Bediener des Luftfahrzeugs erfolgt.
